(19)

Europäisches Patentamt

European Patent Office

Office européen des brevets

(11) EP 4 617 009 A1

(12) EUROPEAN PATENT APPLICATION

(43) Date of publication:
17.09.2025 Bulletin 2025/38

(21) Application number: 25163728.6

(22) Date of filing: 14.03.2025

(51) International Patent Classification (IPC):
B25J 9/16 (2006.01)          G06N 3/08 (2023.01)

(52) Cooperative Patent Classification (CPC):
B25J 9/163; B25J 9/1664; B25J 9/1679;
G06N 3/006; G06N 3/008; G06N 3/045; G06N 3/08;
G05B 2219/40014; G05B 2219/40443;
G05B 2219/40501; G05B 2219/40515;
G05B 2219/40517; G05B 2219/40518;
G05B 2219/40519

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.03.2024 IN 202421019502

(71) Applicant: Tata Consultancy Services Limited
Mumbai, Maharashtra 400 021 (IN)

(72) Inventors:
• SADHU, Arup Kumar
  700135 Kolkata, West Bengal (IN)
• SAHA, Arindam
  700135 Kolkata, West Bengal (IN)
• CHOUDHURY, Anushko Roy
  700135 Kolkata, West Bengal (IN)
• DASGUPTA, Ranjan
  700135 Kolkata, West Bengal (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR ADAPTIVE TASK AND MOTION PLANNING (ATAMP) FOR PERFORMING OBJECT-INVARIANT STACKING OPERATIONS**

(57) This disclosure relates generally to a method and system for adaptive task and motion planning (ATAMP) for object-invariant stacking operations. Traditional TAMP considering only the preconditions for execution of an object stacking task is challenging for performing all kinds of the object-invariant stacking operations The disclosed method adopts an action model for a new object and stacking is performed by drawing inferences and learning rewards using a virtual Discrete Action Space (DAS) based on a heuristically defined reward function. These inferences are utilized for identifying a plurality of new preconditions. Additionally, an efficient stacking position selection strategy is used for a n-armed bandit problem, which leads to fast convergence for performing the object-invariant stacking operations. A robotic agent repetitively interacts with an environment in real-time to adapt the action model for the new object. After adaptation, the robotic agent can perform the object-invariant stacking operations on objects with varying poses.

FIG. 2

EP 4 617 009 A1

**Description**

CROSS-REFERENCE TO RELATED APPLICATIONS AND PRIORITY

The present application claims priority to Indian application no. 202421019502, filed on March 16, 2024.

TECHNICAL FIELD

The disclosure herein generally relates to robot task and motion planning, and, more particularly, to a method and system for adaptive task and motion planning (ATAMP) for performing object-invariant stacking operations.

BACKGROUND

Task planning is a sequence of discrete symbolic action models. An action model comprises predefined conditions (preconditions) for task execution and changes observed after a motion planning (continuous geometric realization) of the task. The motion planning computes trajectories to be followed by a robot agent in a physical world, satisfying differential constraints imposed by the robot dynamics and avoiding collisions. Task and motion planning (TAMP) performs constraint hybrid optimization between discrete task planning and continuous motion planning. This constraint hybrid optimization approach is efficient to handle the task and reduces the chance of failure compared to approaches that address the TAMP as independent subproblems. Failure of the task is associated with either failure in the task planning or in the motion planning. Apart from these failures, the task can still be considered a failure even if the task planning and the motion planning are executed correctly but the outcome is not satisfactory. The TAMP considering only the preconditions for the execution of an object stacking task are not sufficient for all kinds of object stacking tasks. The preconditions are object specific, and enhancement of the preconditions is not straight-forward and requires manual encoding, which again is a tremendous and tedious effort, including human errors.

SUMMARY

Embodiments of the present disclosure present technological improvements as solutions to one or more of the above-mentioned technical problems recognized by the inventors in conventional systems. For example, in one embodiment, a method for adaptive task and motion planning (ATAMP) for performing object-invariant stacking operations is provided. The method includes receiving, via a robotic agent an object-invariant stacking operation, an action model comprising a plurality of existing preconditions for performing the object-invariant stacking operation, an object, a plurality of bottom objects, an object release height, and a dimension of a virtual Discrete Action Space (DAS). Further the method includes initializing a reward function for a plurality of stacking positions corresponding to the virtual DAS, an object database, and a reward database. The method further includes training an Adaptive Task and Motion Planning (ATAMP) model with each of the plurality of bottom objects for performing the corresponding object-invariant stacking operation, by: picking, by the robotic agent, the object, for stacking on the bottom object of the plurality of bottom objects; checking the plurality of existing preconditions in the action model, for performing the object-invariant stacking operation; failure of at least one existing precondition of the plurality of existing preconditions results failure in performing the object-invariant stacking operation; generating a plurality of new preconditions upon successfully satisfying the plurality of existing preconditions; appending the plurality of new preconditions to the action model, to generate a new action model; checking the plurality of new preconditions in the new action model, for performing the object-invariant stacking operation, if the plurality of new preconditions are successfully satisfied, the object-invariant stacking operation is performed successfully by stacking the object on top of the bottom object at a success stacking position, and if failure of at least one new precondition of the plurality of new preconditions results in failure in performing the object-invariant stacking operation, and the bottom object is detected as a new bottom object; learning a plurality of stacking positions using a n-armed bandit problem upon detecting the new object via one of a second inference, a third inference, and a fourth inference; and performing the object-invariant stacking operation on the bottom object, using the plurality of stacking positions from an updated virtual DAS.

In another aspect, a system for adaptive task and motion planning (ATAMP) for performing object-invariant stacking operations is provided. The system comprising: a memory storing instructions; one or more communication interfaces; and one or more hardware processors coupled to the memory via the one or more communication interfaces, wherein the one or more hardware processors are configured by the instructions to: receive via a robotic agent, an object-invariant stacking operation, an action model comprising a plurality of existing preconditions for performing the object-invariant stacking operation, an object, a plurality of bottom objects, an object release height, and a dimension of a virtual Discrete Action Space (DAS); initialize a reward function for a plurality of stacking positions corresponding to the virtual DAS, an object database, and a reward database; and train an Adaptive Task and Motion Planning (ATAMP) model with each of the plurality of bottom objects for performing the corresponding object-invariant stacking operation, by: picking, by the robotic agent, the object, for stacking on the bottom object of the plurality of bottom objects; checking the plurality of existing preconditions in the action model, for performing the object-invariant stacking operation, wherein failure of at least one existing precondition of the plurality of existing preconditions results failure in performing the object-invariant stacking operation; generating a plurality of new preconditions upon successfully satisfying the plurality of existing preconditions; appending the plurality of new preconditions to the action model, to generate a new action model; checking the plurality of new preconditions in the new action model, for performing the object-invariant stacking operation, wherein if the plurality of new preconditions are successfully satisfied, the object-invariant stacking operation is performed successfully by stacking the object on top of the bottom object at a success stacking position, and wherein failure of at least one new precondition of the plurality of new preconditions results in failure in performing the object-invariant stacking operation, and the bottom object is detected as a new bottom object; learning a plurality of stacking positions using a n-armed bandit problem upon detecting the new object via one of a second inference, a third inference, and a fourth inference; and performing the object-invariant stacking operation on the bottom object, using the plurality of stacking positions from the updated virtual DAS.

In yet another aspect, there are provided one or more non-transitory machine-readable information storage mediums comprising one or more instructions which when executed by one or more hardware processors cause a method for adaptive task and motion planning (ATAMP) for performing object-invariant stacking operations is provided. The method includes receiving, via a robotic agent an object-invariant stacking operation, an action model comprising a plurality of existing preconditions for performing the object-invariant stacking operation, an object, a plurality of bottom objects, an object release height, and a dimension of a virtual Discrete Action Space (DAS). Further the method includes initializing a reward function for a plurality of stacking positions corresponding to the virtual DAS, an object database, and a reward database. The method further includes training an Adaptive Task and Motion Planning (ATAMP) model with each of the plurality of bottom objects for performing the corresponding object-invariant stacking operation, by: picking, by the robotic agent, the object, for stacking on the bottom object of the plurality of bottom objects; checking the plurality of existing preconditions in the action model, for performing the object-invariant stacking operation; failure of at least one existing precondition of the plurality of existing preconditions results failure in performing the object-invariant stacking operation; generating a plurality of new preconditions upon successfully satisfying the plurality of existing preconditions; appending the plurality of new preconditions to the action model, to generate a new action model; checking the plurality of new preconditions in the new action model, for performing the object-invariant stacking operation, if the plurality of new preconditions are successfully satisfied, the object-invariant stacking operation is performed successfully by stacking the object on top of the bottom object at a success stacking position, and if failure of at least one new precondition of the plurality of new preconditions results in failure in performing the object-invariant stacking operation, and the bottom object is detected as a new bottom object; learning a plurality of stacking positions using a n-armed bandit problem upon detecting the new object via one of a second inference, a third inference, and a fourth inference; and performing the object-invariant stacking operation on the bottom object, using the plurality of stacking positions from an updated virtual DAS.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for adaptive task and motion planning (ATAMP) for performing object-invariant stacking operations, in accordance with some embodiments of the present disclosure.

FIG. 2 is a functional architecture depicting process flow of the system for the ATAMP for performing the object-invariant stacking operations, in accordance with some embodiments of the present disclosure.

FIGS. 3A, and 3B depict a flow diagram of a method for the ATAMP for performing the object-invariant stacking operations, using the system of FIG. 1, in accordance with some embodiments of the present disclosure.

FIGS. 4A, 4B, and 4C depict possible situations for stacking an object on top of a bottom object, in accordance with some embodiments of the present disclosure.

FIG. 5 depicts a robotic agent performing the object-invariant stacking operations, in accordance with some embodiments of the present disclosure.

FIG. 6 depicts a start and a goal arrangement of objects for a primitive stacking operation, along with a manipulator of the robotic agent required to manipulate bottom objects, resting on a table, in accordance with some embodiments of the present disclosure.

FIG. 7 depicts the robot agent satisfying a plurality existing preconditions but failing to perform a primitive stack operation, in accordance with some embodiments of the present disclosure.

FIG. 8 depicts a virtual Discrete Action Space (DAS) for a n-armed bandit problem, in accordance with some embodiments of the present disclosure.

FIG. 9 depicts a working principle for generating a plurality of new preconditions, in accordance with some embodiments of the present disclosure.

FIGS. 10A, and 10B depict a basis for a second inference, and a third inference towards generating the plurality of new preconditions, in accordance with some embodiments of the present disclosure.

FIG. 11 depicts a block diagram of a stacking position selection strategy for the n-armed bandit problem, in accordance with some embodiments of the present disclosure.

FIG. 12 depicts successful stacking of the object on top of the bottom object by using the ATAMP for performing object-invariant stacking operations, in accordance with some embodiments of the present disclosure.

FIG. 13 depicts variation of cardinalities of a success set and a neighbour set with respect to iteration for a plurality of bottom objects, in accordance with some embodiments of the present disclosure.

FIG. 14 depicts variation of rewards with respect to stacking positions for the plurality of bottom objects, in accordance with some embodiments of the present disclosure.

FIG. 15 depicts variations of log of cardinalities of the success set and the neighbour set with respect to iteration for the plurality of bottom objects, in accordance with some embodiments of the present disclosure.

FIG. 16 depicts satisfying the plurality of new preconditions corresponding to a first inference, the second inference, and the third inference, for successfully performing the object-invariant stacking operations, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Task and motion planning (TAMP) is an active research domain that mainly focuses on advancements in task planning and motion planning. Solving TAMP problems is computationally expensive, considering an autonomous agent should make effective decisions efficiently or quickly. A typical TAMP algorithm works on a continuous space, and task objectives are specified with goals, where abstraction allows agents to understand the most salient aspects of a task by reasoning at a higher level. However, early works assume the abstraction can be first established by decomposing the task planning and afterwards refining the abstraction to an actual plan for solving the task. The applicability of these assumptions in robotics is untenable because the abstraction from a complex geometric constraint is not straight-forward. Therefore, a combined plan, where a high-level abstraction provides guidance for low-level motions, is more suitable. The combined TAMP framework considers multiple symbolic plans to solve a problem. Hence, the TAMP algorithm must be efficient enough to find an optimal plan from a large set of all possible symbolic plans, and the sets of possible action parameters and motion plans are uncountably large. Therefore, the traditional TAMP mainly focuses on improving the computational performance of algorithms instead of finding the optimal solutions. In some of the existing solutions, optimal TAMP algorithms show poor initial solution performance, and they require problem specific samplers and local motion planners.

The TAMP approaches are broadly divided into two categories based on the interaction between high-level symbolic reasoning and low-level continuous variables during planning. The first category is the approach that optimizes the trajectories, and the second category uses sampling-based procedure. In both the approaches, TAMP systems rely on hand specified planning models. To alleviate a handcrafting problem, researchers use multiple learning approaches to learn state and action abstractions that are explicitly optimized for effective and efficient planning. Hence significant efforts are required to improve the TAMP algorithms in state action learning for improvements in effectiveness and efficiency. However, learning the state action pair from the occurrence of failure even after the task and motion are successfully planned and executed is not explored in the literature.

Further, existing works consider only existing preconditions of an object for performing object-invariant stacking operations. They do not consider the TAMP utilizing the existing preconditions along with newly identified preconditions for performing the object-invariant stack operations. In the existing works, the TAMP considering only the preconditions for the execution of an object stacking task is challenging for performing all kinds of the object-invariant stacking operations.

Embodiments herein provide a method and system for adaptive task and motion planning (ATAMP) for the object-invariant stacking operations. The disclosed method results in generalization of the object-invariant stacking operations for multiple objects, in contrast to a handcrafted action model based TAMP. The disclosed method adopts an action model for a new object and stacking is performed by drawing inferences using intuitions and learning a reward using visual clues of a virtual Discrete Action Space (DAS) based on a heuristically defined reward function. With this reward function, the action model adaptation problem is formulated as an n-armed bandit problem. Additionally, an efficient stacking position selection strategy is used for the n-armed bandit problem, which leads to fast convergence. A robotic agent repetitively interacts with an environment in real-time to adapt the action model for the new object. After adaptation, the robotic agent can perform the object-invariant stacking operations for objects with varying poses. The disclosed method is tested in simulation using the Universal Robots 5 (UR5) manipulator with a two-finger gripper. The disclosed ATAMP outperforms the traditional handcrafted action model-based TAMP by a significant margin in terms of success rate.

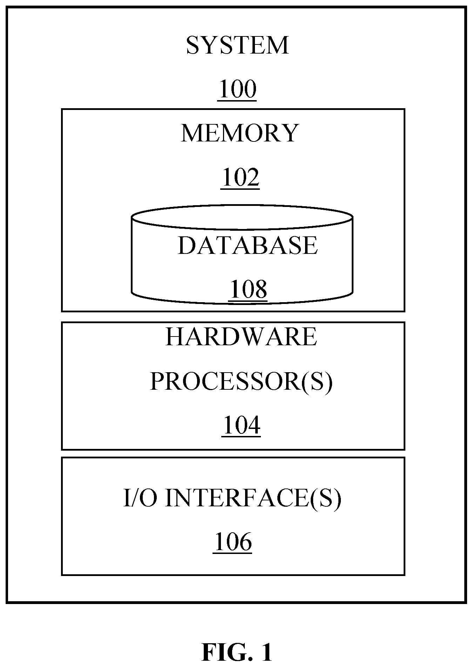

Referring now to the drawings, and more particularly to FIG. 1 through FIG. 16, where similar reference characters denote corresponding features consistently throughout the figures, there are shown preferred embodiments, and these embodiments are described in the context of the following exemplary system and/or method.

FIG. 1 is a functional block diagram of a system 100, alternatively referred to as the robotic agent for the ATAMP for performing the object-invariant stacking operations, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on the object-invariant stacking operations, the action model comprising a plurality of existing preconditions for performing the object-invariant stacking operation, the object, a plurality of bottom objects, an object release height, a plurality of new preconditions, an object database, a reward database, a dimension of the virtual DAS, and thereof. The memory 102 further comprises a n-armed bandit problem, the reward function, and a ATAMP model. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein.

The memory 102 further comprises information pertaining to input(s)/output(s) of each step performed by the systems and methods of the present disclosure. In other words, input(s) fed at each step and output(s) generated at each step are comprised in the memory 102 and can be utilized in further processing and analysis.

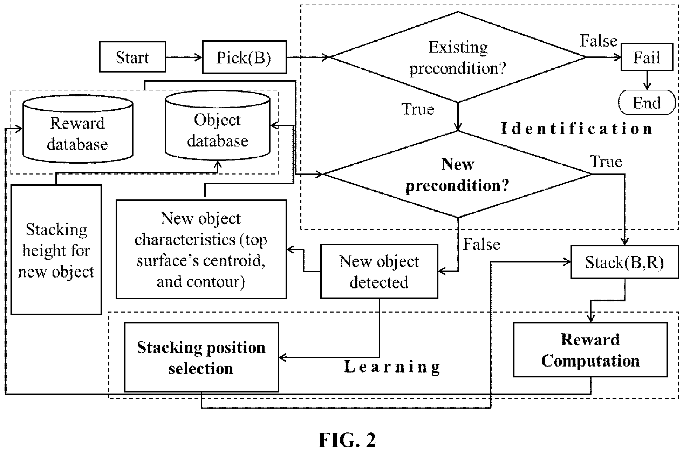

FIG. 2 is a functional architecture depicting process flow of the system 100 for the ATAMP for performing the object-invariant stacking operations, in accordance with some embodiments of the present disclosure. The functional architecture describes the ATAMP for performing the object-invariant staking operation, Stack (B, R) as shown in FIG. 2, in accordance with some embodiments of the present disclosure. Pick(B) indicates, an object B is successfully picked by the robotic agent for stacking on top of the bottom object R. The object is a stacking object for stacking on top of the on top of the bottom object R, in accordance with some embodiments of the present disclosure. After successful picking, an identification phase begins. The identification phase involves two types of precondition satisfaction. These preconditions are the plurality of existing preconditions and the plurality of new preconditions. The plurality of existing precondition for the action model "Stack (B, R)" is as follows:

```
(: action Stack: parameters (? B ? R)
: precondition (and (Clear? R)
(Handful? B) (On Table? R)
 : effect (On? B ? A))
```

Failure to satisfy the plurality of existing preconditions results in the failure to stack B on top of R, and this terminates the object-invariant stacking operation. On satisfaction of the plurality of existing preconditions, the plurality of new preconditions are attempted to satisfy by utilizing the reward database and the object database. The object database contains a plurality of characteristics associated with the bottom object comprising a centroid of top surface, a contour, and thereof. The object database is updated on detection of any new bottom object, i.e., failure in satisfaction of the plurality of new preconditions. The detection of any new object invokes a learning phase via a stacking position selection block, which offers the stacking position. This stacking position is fed into the Stack (B, R) for stacking B on top of R. Similarly, by utilizing the reward database and the object database, the identification phase offers an optimal action on satisfaction of the plurality of new preconditions, which leads to a quick success. Reward computation for the stacking position is computed by using a n-armed bandit problem following a heuristically defined reward function after stacking B on top of R. This reward is employed to update the reward database.

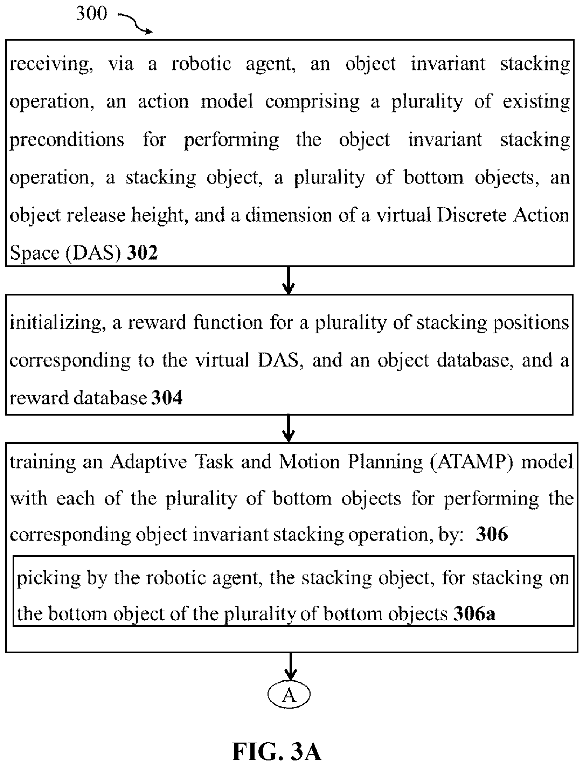

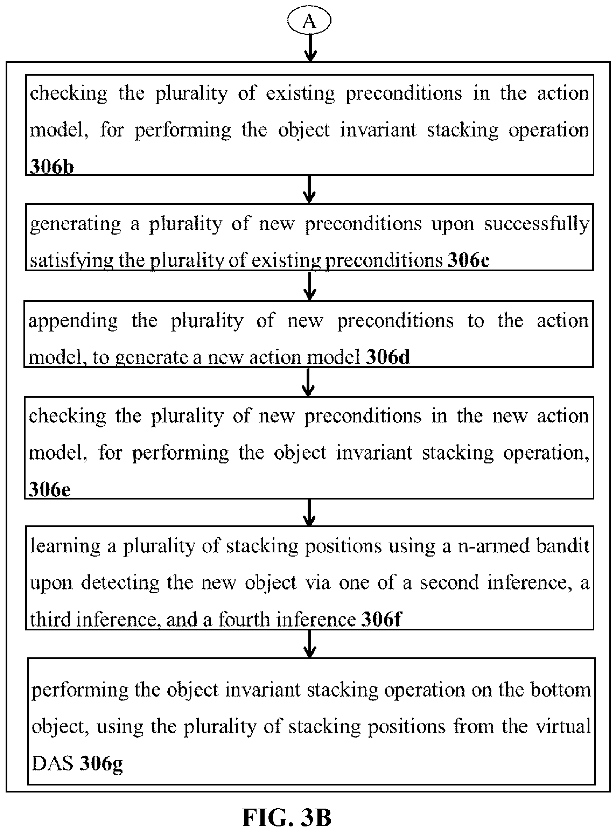

FIGS. 3A, and 3B depict a flow diagram of a method 300 for the ATAMP for performing the object-invariant stacking operations, using the system 100 of FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 400 by the processor(s) 104. The steps of the method 300 of the present disclosure will now be explained with reference to the components or blocks of the system 100 as depicted in FIG. 1, the functional architecture depicted in FIG. 2, and the steps of flow diagram as depicted in FIGS. 3A, and 3B. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to steps of FIG. 3A, at step 302 of the method 300, the one or more hardware processors of the robotic agent are configured to receive, the object-invariant stacking operation, the action model comprising the plurality of existing preconditions for performing the object-invariant stacking operation, the object, the plurality of bottom objects, the object release height, and the dimension of the virtual DAS. The object-invariant stacking operation refers to stacking the object on top of the bottom object, irrespective to the shape and size of the bottom object of the plurality of bottom objects.

At step 304 of the method 300, the one or more hardware processors initialize the reward function for a plurality of stacking positions corresponding to the to the virtual DAS, the object database, and the reward database.

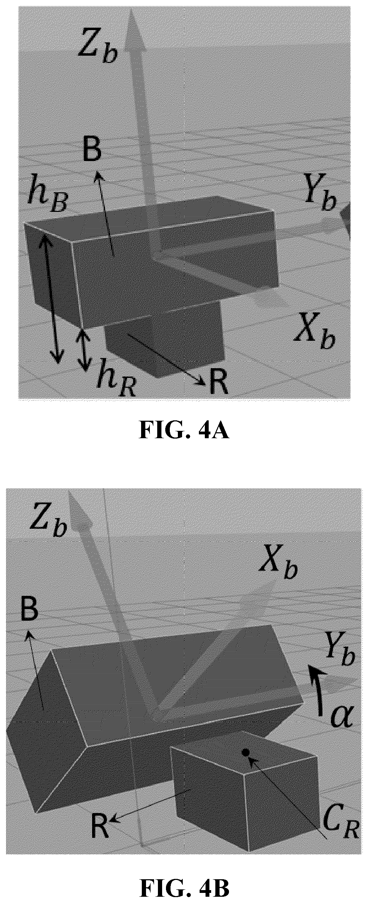

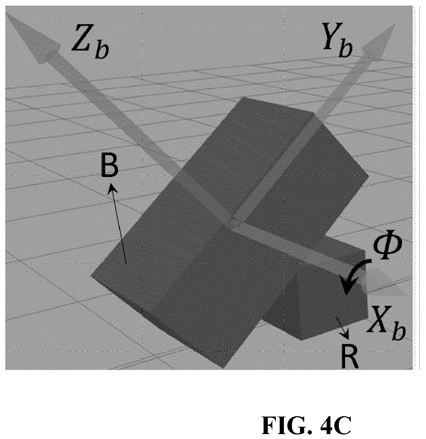

Stacking of the object B on top of the bottom object R results in three possible situations, as depicted in FIGS. 4A, 4B, and 4C. Specifically, FIG. 4A represents the successful stacking of the object B on top of the bottom object R. In FIG. 4A, $h_R$ and $h_B$ are a height of the bottom object R, and a stacking height of the object B, respectively. Specifically, FIG. 4B shows a failure case in stacking the object B on top of the bottom object R. A rotation angle around y-axis (pitch), $\alpha$ is occurred due to failure of stacking the object B on top of the bottom object R. The centroid of the top surface of the bottom object R is denoted with $C_R$ in FIG. 4B. Specifically FIG. 4C depicts another failure in stacking the object B on top of the bottom object R. The failure creates a roll (rotation angle around the x-axis), and this rotation angle is denoted with $\phi$. Each of the object-invariant stacking operation is heuristically measured by formulating the reward as a function of (i) a height of the bottom object ($h_R$), (ii) the stacking height of the object ($h_B$), (iii) the rotation angle of the object around y-axis ($\phi$), and (iv) the rotation angle of the object around the x-axis ($\alpha$). The reward for executing the stacking position at time $t$ is denoted by $r_t$ (a), and is computed using the reward function as:

$$r_t(a) = \frac{\beta}{\max(|\phi|, |\alpha|)}, \beta \in R^+, \; if \; h_B \geq h_R,$$
$$= -\beta, \text{else} \qquad\qquad (1)$$

Where $\beta$ is a positive real number i.e., $R^+$. Considering the reward function as a metric for measuring the stacking performance of the object-invariant stacking operation, $\alpha$ is considered as the successful stacking position it satisfies the following equation:

$$r_t(a) > \delta\beta \qquad\qquad (2)$$

Where $\delta\beta$ is a minimum reward for successful stacking and the value of $\delta\beta$ is obtained empirically. The computed reward function is updated in the reward database.

At step 306 of the method 300, the one or more hardware processors train, an ATAMP model with each of the plurality of bottom objects for performing the corresponding object-invariant stacking operation. The training of the ATAMP model with each of the plurality of bottom objects is explained through steps 306a to 306g. At step 306a, the robotic agent picks the object, for stacking on the bottom object of the plurality of bottom objects.

At step 306b, the plurality of existing preconditions is checked in the action model, for performing the object-invariant stacking operation. Failure of at least one existing precondition of the plurality of existing preconditions results in failure in performing the object-invariant stacking operation.

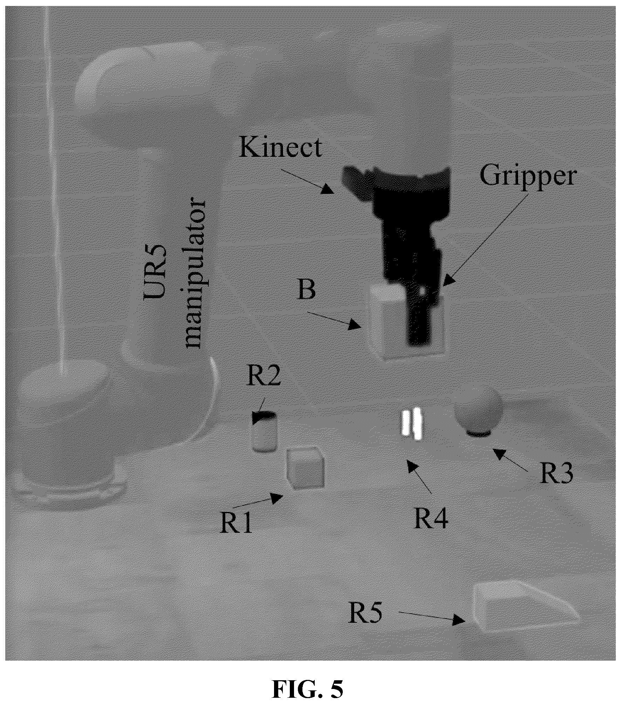

Consider a situation with a simple stack task as shown in FIG. 5 which depicts performing the object-invariant stacking operations, in accordance with some embodiments of the present disclosure. Object B is the object to be stacked on top of any one bottom objects R1, R2, R3, R4, and R5. The robotic agent can pick the object B for successful stacking as shown in FIG. 5, in accordance with some embodiments of the present disclosure. The robotic agent performs basic stacking operation, where the stacking operation has the plurality of existing preconditions. The plurality of existing preconditions comprises: (i) the top surfaces of the bottom objects, i.e., R1 to R5 are clear and (ii) are reachable by the robotic agent. If the object B is bigger than the bottom object, as in the case of R1 and R2, as shown in FIG. 5, then the object-invariant stacking operation can only be considered successful when the center of gravity of the object lies within the top surface of the bottom object. The object-invariant stacking operation can never be successful or be difficult to attain if the top surface of the bottom object is inclined or curved, as in the case of objects R3, R4, and R5, as shown in FIG. 5.

The traditional TAMP has two main modules. One is a discrete task planning module, and another is a continuous motion planning module. The discrete task planning offers a sequence of action models to be executed in a continuous domain. The action model consists of predefined conditions referred to as the plurality of existing preconditions, parameters required to execute the task, and changes are observed after execution by the motion planner. The eligibility of the task is investigated in the current situation by satisfying the plurality of existing preconditions of the action model. The object B needs to be stacked on the bottom object R, i.e., Stack (B, R). The action model for the task Stack (B, R) using a Planning Domain Definition Language (PDDL) is given by:

```
(: action Stack: parameters (? B ? R)
: precondition (and (Clear? R)
(Handful? B) (On Table? R)
 : effect (On? B ? A))
```

In the action model B and R are the input parameters of an object type. The plurality of existing preconditions for Stack (B, R) are defined using predicates which are symbolic representations to define a relationship: "Clear", "Handfull", and "On Table". (Clear? R) represents the object R is clear enough to place the object B on top of the object R. (Handfull ?B) indicates the object B is held by the gripper of the robot agent. (On Table? R) indicates the object R is on the top surface of the table. Finally, the effect of the action model is (On? B? R), which indicates that object B is on top of object R. Here, "On" represents another predicate.

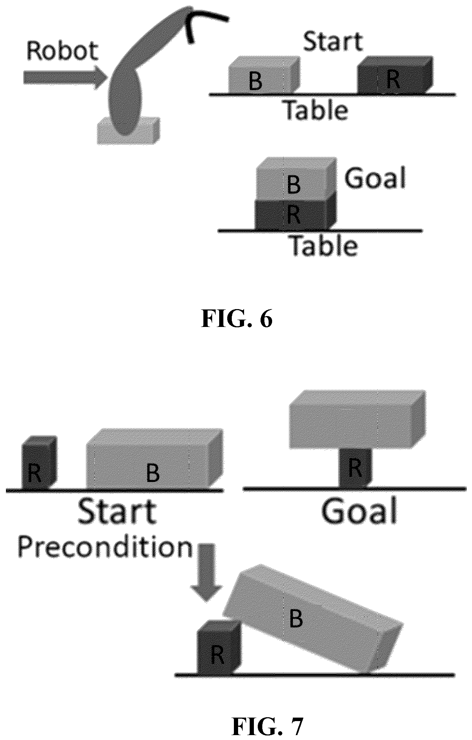

The traditional TAMP is considering only the plurality preconditions for performing the object stacking task are not sufficient for all kinds of object stacking tasks. The plurality of the preconditions are object specific, and further the enhancement of the plurality of preconditions is not straight-forward and requires manual encoding, which again is a tremendous and tedious effort, including human errors. In the existing works, the traditional TAMP considering only the plurality of preconditions for the execution of the object stacking task is challenging for performing all kinds of the object-invariant stacking operations. FIG. 6 depicts a start and a goal arrangements of objects B and R for a primitive stacking operation, along with the manipulator of the robotic agent required to manipulate the bottom objects, resting on a table, in accordance with some embodiments of the present disclosure. FIG. 7 depicts a different situation where the plurality of existing preconditions for the object stacking task is not enough for performing the object invariant stacking operation, and leads to failure, in accordance with some embodiments of the present disclosure. Hence, the plurality of existing preconditions defined for stack operations is object-specific and needs frequent amendment with a change in the bottom object. Frequent amendment of the plurality of preconditions in the action model and designing an object-specific action model for the same task is tedious. One rich enough action model to successfully stack all objects is difficult to design, and sometimes it is infeasible.

At step 306c, a plurality of new preconditions is generated, upon successfully satisfying the plurality of existing preconditions. Failure of the task is associated with either failure in the task planning or in the motion planning. Apart from these failures, the task can still be considered a failure even if the task planning and motion planning are executed correctly but the outcome is not satisfactory.

The disclosed method overcomes the limitation of the traditional TAMP by identifying the plurality of new preconditions for performing the object-invariant stacking operations, in accordance with some embodiments of the present disclosure. The plurality of new preconditions is generated by employing the virtual DAS. The virtual DAS is carried by the end-effector of the robotic agent until it reaches the top of the bottom object. Once the end effector reaches the top of the bottom object, the action selection and execution by the robotic agent are done by employing a stacking position selection strategy.

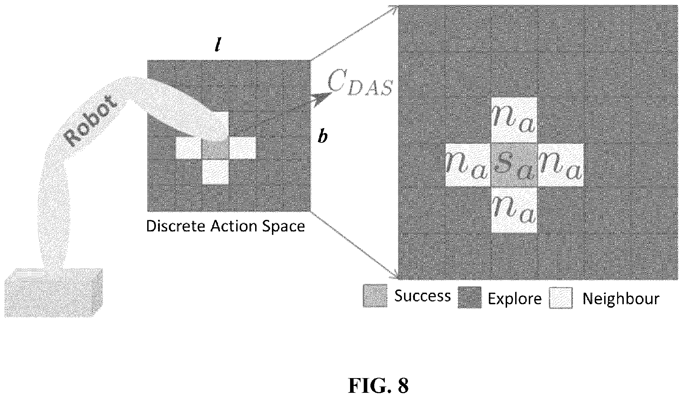

One of the virtual DAS for the n-armed bandit problem is depicted in FIG. 8, in accordance with some embodiments of the present disclosure. The virtual DAS is discretized along length by l units and along width by b units. Naturally, the virtual DAS has $lb$ number of grids each with a grid center. Each of the grid centers in FIG. 8 represents the stacking position among the plurality of stacking positions, in accordance with some embodiments of the present disclosure. The virtual DAS contains three types of stacking positions of the plurality of stacking positions: a success stacking position ($s_a$), a neighbour stacking position ($n_a$), and an explore stacking position ($e_a$). In FIG. 8, the success stacking position, the neighbour stacking position, and the explore stacking position are depicted as success, and explore respectively.

The $s_a$ in the grid of the virtual DAS is considered as the success stacking position if it satisfies the reward function. A plurality of success stacking positions are collected from the virtual DAS in a success set such that $s_a \in S$.

The stacking positions in the neighbour of $s_a$ are considered the neighbour stacking positions ($n_a$). The plurality of neighbour stacking positions in the virtual DAS is denoted by a neighbour set $N$. For simplicity, four $n_a \in N$ around $s_a \in S$ are considered as the neighbour stacking positions, ignoring the diagonal neighbours as shown in FIG. 8, in accordance with some embodiments of the present disclosure. $\{s_a^n\}$ is set of neighbours that corresponds to $s_a$.

The stacking positions that do not belong to the success set $S$, and the neighbour set $N$ are considered as a plurality of explore stacking positions ($e_a$) and are collected in a explore set E. The virtual DAS is represented as union of the success set, the neighbour set, and the explore set.

$$DAS \leftarrow S \cup N \cup E \qquad (3)$$

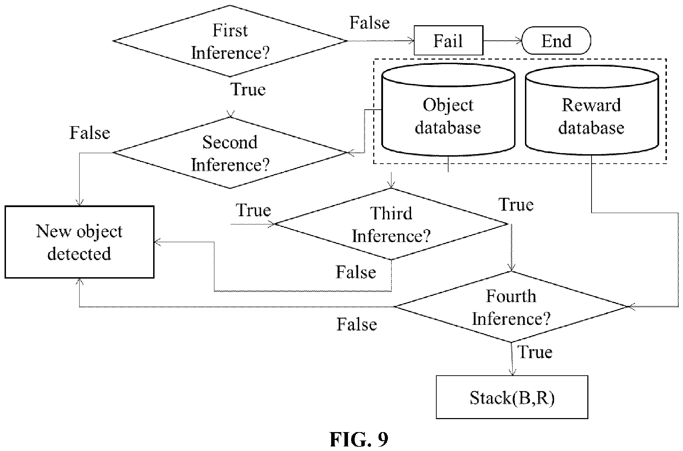

FIG. 9 depicts a working principle for generating the plurality of new preconditions, in accordance with some embodiments of the present disclosure. The working principle for generating the plurality of new preconditions comprises of a first inference, a second inference, a third inference, and a fourth inference.

In the first inference the distance between centroid of the virtual DAS ($C_{DAS}$), and centroid ($C_R$) of top surface of the bottom object should be zero. Symbolically the first inference is represented as: $DistanceZero$(? ($C_{DAS}$, ? ($C_R$)). If the first inference returns false, then performing the object-invariant stacking operation is failed. If the first inference returns true, then the second inference is checked.

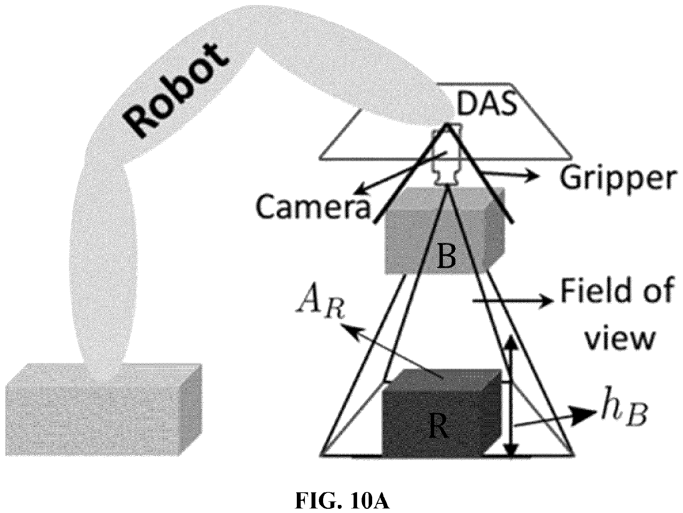

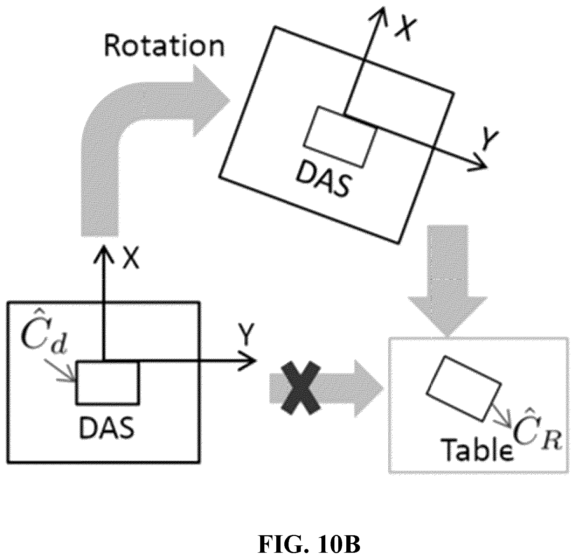

FIG. 10A depicts a basis for the second inference towards generating the plurality of new preconditions, in accordance with some embodiments of the present disclosure. specifically, FIG. 10 shows the manipulator of the robotic agent holding the object B using the gripper. A camera is attached to the end-effector of the manipulator in such a way that field of view of the camera is not obstructed by the object B. The virtual DAS is being carried by the end-effector as shown in FIG. 10A, in accordance with some embodiments of the present disclosure. It is apparent from FIG. 10B that the stacking height (releasing height) of object B, i.e., $h_B$, is inversely proportional to the top surface area $A_R$ of the bottom object perceived by the camera. The second inference takes the object database as input for decision-making.

The stacking height $h_B$ of the bottom object B is obtained by matching the perceived top surface area $A_R$ of the bottom object B with the corresponding top surfaces areas $A_d$ of the plurality of bottom objects in the object database. Symbolically the second inference is represented as $Match$(? $A_d$,? $A_R$). Satisfaction of the second inference results to existence of the matching bottom object in the object database whose contour is denoted by $\hat{c}_d$. If the second inference returns false, then the bottom object is considered as the new object. If the second inference returns true, then the third inference is checked.

In the third inference top surface contour $\hat{c}_R$ of the bottom object is matched with the top surface contour $\hat{c}_d$ of the matching object which is selected from the object database inference in the second. The object database is fed to the third inference for decision making. Symbolically the third inference is represented as $Match(? C_d, ? C_R)$. The orientation of the $\hat{c}_d$ within the virtual DAS is shown in FIG. 10B, in accordance with some embodiments of the present disclosure. It is apparent from FIG. 10B that the orientation of the contour $\hat{c}_R$ of the bottom object does not match with the orientation of the $\hat{c}_d$. For successful stacking, the orientations of $\hat{c}_d$ and $\hat{c}_R$ must match. If the third inference returns false, the bottom object is detected as the new object. If the third inference returns true, the fourth inference is checked.

The fourth inference is checked by identifying the success stacking position by formulating the n-armed bandit problem using the reward database. The n-armed bandit problem is a learning mechanism, where the robot agent (bandit) executes the stacking position (arm) among the plurality of stacking positions (arms) in the virtual DAS. On execution of the stacking position each arm, a numerical reward, is expressed as:

$$Q_t(a) = \frac{r_1(a) + r_2(a) \dots \dots r_{m_t}(a)}{m_t(a)}, \qquad (4)$$

Where $Q_t(a)$ is an estimated reward of the stacking position $a$ at time $t$, $m_t(a)$ is the number of times the stacking position has been executed prior to $t$, and $r_1(a) + r_2(a) \dots r_{m_ta}()$ are the rewards in execution of the stacking position $a$ prior to $t$. The simplest way to choose the stacking position $a$ is a random or greedy selection by:

$$a_t^* = \underset{a}{argmax}[Q_t(a)], \qquad (5)$$

Where $a_t^*$ is the success stacking position at the time $t$.

Symbolically the fourth inference is represented as Max(? a $\in$ A, ? $Q_t(a)$). The reward database is fed into the fourth inference to identify the success stacking position. In the fourth inference the success stacking position is identified using the equation (4). The reward is computed for the stacking position by using equation (4). The computed reward is employed to estimate $Q_t(a)$ at time t by Eq. (2). The estimated reward database as depicted in the FIG. 2 is employed to satisfy the plurality of new preconditions for performing the object-invariant stacking operations. If the fourth inference returns false the success stacking position is not found, then the bottom object is detected as the new object. If the fourth inference returns true, results in finding the success stacking position.

Further the first inference, the second inference, the third inference, and the fourth inference, are aggregated to generate the plurality of new preconditions. The aggregation of the first inference, the second inference, the third inference, and the fourth inference results in the generation of plurality of new preconditions, and is represented as:

```
DistanceZero(? (CDAS, ? (CR)), Match(? Ad, ? AR ), Match(? Cd, ? CR ),
          Max(? a □ A, ? Qt(a))
```

At step 306d, the plurality of new preconditions is appended to the action model, to generate a new action model. The new action model is represented as:

```
(: action Stack: parameters (? B ? R)
  : precondition (and (Clear ? R)
(Handfull ? B)(OnTable ? R)
   DistanceZero(? (CDAS, ? (CR)),
Match(? Ad, ? AR), Match(? Cd, ? CR ),
       Max(? a □ A,? Qt(a))
  : effect (On? B ? A))
```

At step 306e, the plurality of new preconditions in the new action model are checked, for performing the object-invariant stacking operation. If the plurality of new preconditions is successfully satisfied, the object-invariant stacking operation is performed successfully by stacking the object on top of the bottom object at the success stacking position. Failure of at least one new precondition of the plurality of new preconditions results in failure in performing the object-invariant stacking operation, and the bottom object is detected as the new bottom object if one of (i) the second inference, (ii) the third inference, and (iii) the fourth inference results false.

At step 306f, a plurality of stacking positions is learnt using the n-armed bandit problem upon detecting the new object via one of the second inference, the third inference, and the fourth inference. The plurality of stacking positions for the detected new object is learnt by:

(a) Identifying a plurality of characteristics of the new object. The plurality of characteristics of the new object comprises centroid of the top surface area, contour, and thereof.
(b) Updating the object database with the identified plurality of characteristics of the new object.
(c) Moving the object over the bottom object based on the virtual DAS, using the end-effector of the robotic agent. The dimension of the virtual DAS for the n-armed bandit problem is discretized along length by l units and along width by b units. The virtual DAS comprises *lb* number of grids. The virtual DAS is a union of (i) the success set comprising the plurality of success stacking positions, (ii) the neighbour set comprising the plurality of neighbour stacking positions, and (iii) the explore set comprising the plurality of stacking positions. Each grid of the virtual DAS represents one of the stacking positions from among (i) the success stacking position of the plurality of success stacking positions, (ii) the neighbour stacking position of the plurality of neighbour stacking positions, and (iii) the explore stacking position of the plurality of neighbour stacking positions.

(d) Randomly generating an integer ($\varepsilon \in [1, \varepsilon_{max}]$). $\varepsilon_l \in [1, \varepsilon_{max}]$ and $\varepsilon_h \in [1, \varepsilon_{max}]$ are two values of $\varepsilon$, and $\varepsilon_h > \varepsilon_l$. The values of $\varepsilon$, $\varepsilon_l$, and $\varepsilon_h$ are selected empirically.

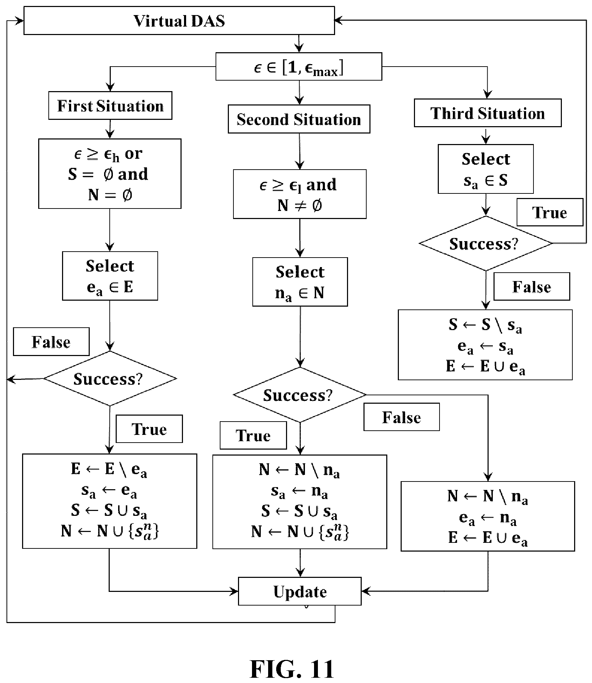

(e) Creating a stacking position selection strategy for the n-armed bandit problem comprising a first situation, a second situation and a third situation for learning the plurality of stacking positions, based on the values of the $\varepsilon$, the $\varepsilon_l$ and the $\varepsilon_h$. The stacking position selection strategy for the n-armed bandit problem is depicted in FIG. 11, in accordance with some embodiments of the present disclosure.

The first situation is created by:

(i) Checking prerequisites for the first situation comprising (i) $\varepsilon \geq \varepsilon_h$, or (ii) the success set $S = \emptyset$ and the neighbour set $N = \emptyset$.

(ii) Choosing the explore stacking position $e_a$ from the explore set $E$ upon satisfying the prerequisites in the first situation. The chosen explore stacking position $e_a$ is considered successful upon satisfaction of the reward function in equation (5). The success block returns true for the first situation upon satisfaction of the reward function as depicted in FIG. 11, in accordance with some embodiments of the present disclosure. For the first situation, if the chosen explore stacking position $e_a$ does not satisfy the reward function in equation (5), the success block as depicted in the FIG. 11 return false, then the random integer $\varepsilon \in [1, \varepsilon_{max}]$) is regenerated.

(iii) Performing a plurality of operations upon the explore stacking position successfully satisfying the reward function as depicted in FIG. 11, in accordance with some embodiments of the present disclosure. The plurality of operation comprises:

(a) Removing the explore stacking position $e_a$ from the explore set $E$.

$$E \leftarrow E \setminus e_a$$

(b) Converting the removed explore stacking position $e_a$ to the success stacking position $s_a$.

$$s_a \leftarrow e_a$$

(c) Appending the converted explore stacking position $s_a$ to the success set $S$.

$$S \leftarrow S \cup s_a$$

(d) Adding the neighbour stacking positions $s_a^n$ that correspond to neighbours of the appended converted explore stacking position $s_a$ to the neighbour set $N$.

$$N \leftarrow N \cup s_a^n$$

(e) Updating the virtual DAS with the plurality of stacking positions in the explore set E, the success set S, and the neighbour set N.

The second situation is created by:

(i) Checking the prerequisites for the second situation comprising (i) $\varepsilon \geq \varepsilon_l$, and (ii) the neighbour set $N \, ! = \emptyset$.

(ii) Selecting the neighbour stacking position $n_a$ from the neighbour set N, upon satisfying the prerequisites in the second situation. The chosen neighbour stacking position $n_a$ is considered successful upon satisfaction of the reward function in equation (5). The success block returns true for the second situation upon satisfaction of the reward function as depicted in FIG. 11, in accordance with some embodiments of the present disclosure.

(iii) performing the plurality of operations upon the neighbour stacking position $n_a$ successfully satisfying the reward function, the plurality of operations comprises:

a. Removing the neighbour stacking position $n_a$ form the neighbour set N.

$$N \leftarrow N \setminus n_a$$

b. Converting the removed neighbour stacking position $n_a$ to the success stacking position $s_a$.

$$s_a \leftarrow n_a$$

c. Appending the converted neighbour stacking $s_a$ position to the success set $S$.

$$S \leftarrow S \cup s_a$$

d. Adding the neighbour stacking positions $s_a^n$ that correspond to the neighbours of the appended converted neighbour stacking position $s_a$ to the neighbour set $N$.

$$N \leftarrow N \cup s_a^n$$

(iv) For the second situation, if the chosen explore stacking position $e_a$ does not satisfy the reward function in equation (5), the success block returns false, as depicted in the FIG. 11, in accordance with some embodiments of the present disclosure. The plurality of operations is performed upon the neighbour stacking position not satisfying the reward function, the plurality of operation comprises:

(a) Removing the neighbour stacking position $n_a$ form the neighbour set N.

$$N \leftarrow N \setminus n_a$$

(b) Converting the removed neighbour stacking position $n_a$ to the explore stacking position $e_a$.

$$e_a \leftarrow n_a$$

(c) Appending the converted neighbour stacking position $e_a$ to the explore set $E$.

$$E \leftarrow E \cup e_a$$

(v) updating the virtual DAS with the plurality of stacking positions in the explore set $E$, the success set $S$, and the neighbour set $N$.

Creating the third situation upon not satisfying the first situation and the second situation by:

(i) Selecting the success stacking position $s_a$ from the success set;
(ii) Performing the plurality of operations upon the success stacking position not satisfying the reward function, the plurality of operation comprises:

(a) Removing the success stacking position $s_a$ from the success set $S$.

$$S \leftarrow S \setminus s_a$$

(b) Converting the removed success stacking position $s_a$ to the explore stacking position $e_a$.

$$e_a \leftarrow s_a$$

(c) Adding the converted success stacking position $e_a$ to the explore set E.

$$E \leftarrow E \cup e_a$$

(iii) Regenerating the random integer $\varepsilon \in [1, \varepsilon_{max}])$ upon the selected success stacking position satisfying the reward function.

At set 306(g), the object-invariant stacking operation is performed on the bottom object, using the plurality of stacking positions from the updated virtual DAS.

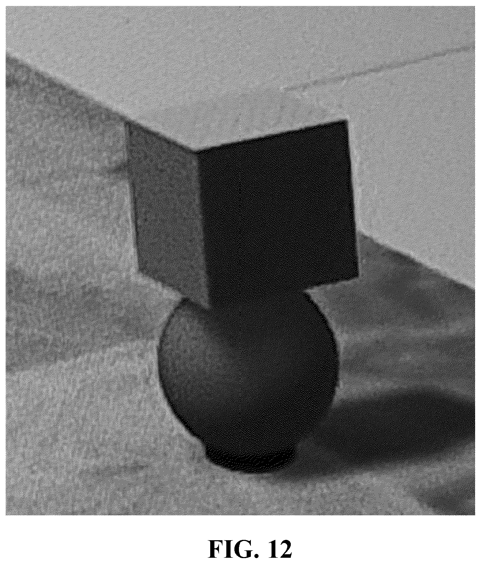

The trained ATAMP model, during inferencing stage, upon satisfying the existing preconditions and the new preconditions, performs the object-invariant stacking operations. FIG. 12 depicts successful stacking of the object on top of the bottom object by using the ATAMP for object-invariant stacking operations, in accordance with some embodiments of the present disclosure.

**Experimental Results**

The experimental results are presented with a simulation setup, procedure, and results with discussion. The results are fourfold. The first fold shows the cardinalities of the success set S, and neighbour set $N$ with iteration. The second fold presents the variation of the reward offered by equation (1) with the stacking position among the plurality of stacking positions. The third fold tests efficacy of the disclosed in various settings. Finally, the fourth fold demonstrates the performance of the disclosed method compared to the traditional TAMP in terms of success rate.

**A. Setup:** All the simulations are conducted on a laptop with an Intel i9 20-core processor having a clock speed of 5.4 GHz and 32 GB of RAM. The laptop has NVIDIA GeForce RTX 4090 and 16 GB of graphics DDR6 synchronous dynamic RAM. The operating system of the said laptop is Ubuntu 20.04.6 LTS. The disclosed approach is implemented using Python 3.11, C++, and simulated on Robot Operating System (ROS) Noetic with Gazebo using the Universal Robots 5 (UR5) manipulator with a two-fingered gripper fixed on a table. A Kinect sensor (Red Green Blue-Depth (RGB-D) camera) is attached at the tip of the manipulator, as shown in FIG. 5, in accordance with some embodiments of the present disclosure. In each of the simulations, the object is a cube and is held by the gripper of the UR5 manipulator, as shown in FIG. 5, in accordance with some embodiments of the present disclosure. The bottom objects are a cube, cylinder, sledge, sticks, and globe. The virtual DAS has a dimension of 0.25m $\times$ 0.25m, with $l = 50$ and $b = 50$. The object release height for all the objects is fixed at 1.2m, where the table height is 1.05m. The value of $\beta$ in equation (1) is 1000, and the value of $\delta\beta$ in equation (2) is fixed at 50. For the stacking position selection strategy, the parameters used are: $\varepsilon_{max} = 10$, $\varepsilon_l = 2$, and $\varepsilon_h = 8$.

**B. Procedure:** The simulation procedures for each fold are provided. In each fold, the bottom objects are a cube, cylinder, sledge, and globe. For each of the bottom object, the cardinalities of sets $S$ and $N$ are separately noted at each iteration for the first fold up to 300 iterations. The second fold records the rewards for each stacking position within the virtual DAS. The third fold employs the rewards recorded in the second fold to predict the optimal action for a different object by employing the new precondition which corresponds to the fourth inference. The third fold demonstrates that the learned rewards may fail to offer the optimal stacking position for performing the object-invariant stacking operations. However, it is beneficial because it is a good starting point instead of learning from the very beginning. Finally, the third fold demonstrates that the new precondition corresponds to the first inference, the second inference and the third inference assists in successful stacking irrespective position of the of the bottom object. The fourth fold demonstrates a comparison of the disclosed method the traditional TAMP in terms of success rate. The success rate is defined as the ratio of the number of times successfully performed the object-invariant stacking operation to the number of times attempted to perform the object-invariant stacking operations. During comparison, an action space for the traditional TAMP is redefined as the top surface of the bottom object only, which is a subset of the virtual DAS.

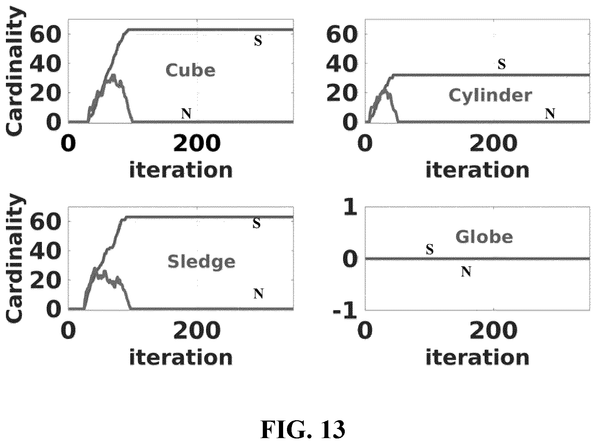

**C. Result:** The results section illustrates the results with discussion to establish the efficacy of the disclosed approach. For the first fold, FIG. 13 shows variation of cardinalities of the success S and the neighbour set $N$ with respect to iteration for the bottom objects cube, cylinder, sledge, and globe, in accordance with some embodiments of the present disclosure. The cardinalities of the success set $S$ and the neighbour set $N$ start increasing after a finite iteration for all bottom objects, except the globe. This indicates that successful stacking position $s_a \in S$ and the corresponding neighbour stacking positions ($n_a \in N$) are identified for all the bottom objects, except the globe within a finite iteration. Suddenly, the cardinality of the neighbour set $N$ starts decreasing until it reaches zero, but the cardinality of the success set $S$ increases and converges to a fixed number. This indicates that each $n_a$ is examined by the disclosed stacking position selection strategy, and mostly eligible $n_a$ are converted into $s_a$. This assists in rapid exploration of $s_a$ instead of exploring the entire virtual DAS.

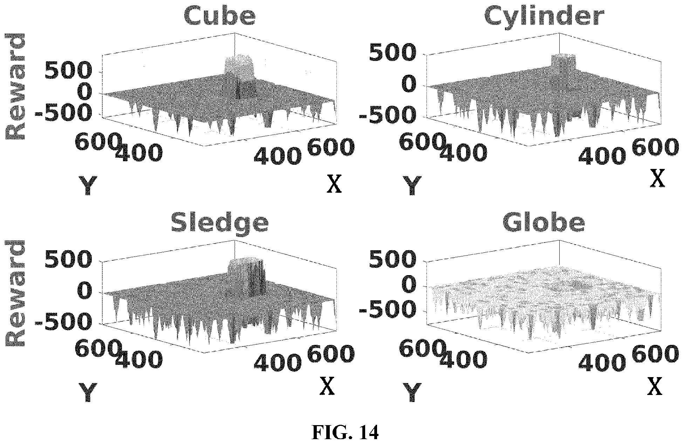

For the second fold, FIG. 14 depicts variation of the rewards with respect to stacking positions for the bottom objects cube, cylinder, sledge, and globe, in accordance with some embodiments of the present disclosure. Naturally, the reward value is high for the stacking positions actions, which can stack successfully, except for the object globe. For the globe, the maximum reward value is zero. That's why not a single $s_a$ is found considering the globe as the bottom object, which is also evident from FIG. 13.

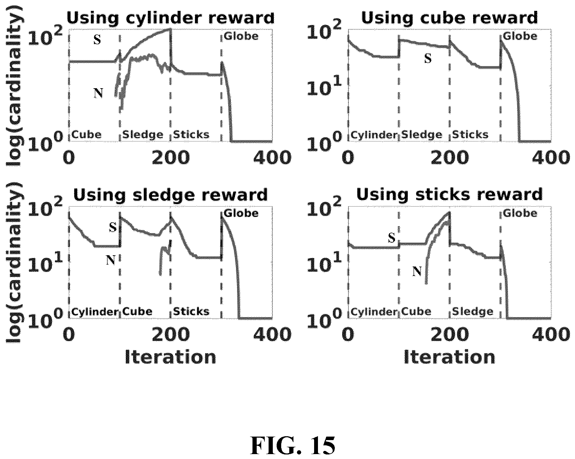

For the third fold, FIG. 15 depicts variations of log of cardinalities of success sets $S$ and the neighbour set $N$ with iteration, in accordance with some embodiments of the present disclosure. The log of cardinality plot is done to avoid empty $S$ and empty $N$. The plot in FIG. 15 is separated into four equal regions by four dashed vertical lines. Each region shows the variation of the log of cardinalities of the success set $S$ and the neighbour set $N$ with iteration for the bottom object, as mentioned in that region. The log of cardinality of the success set $S$ decreases when failure occurs for some of the existing

$s_a$, and the log of cardinality of the success set S increases once additional $s_a$ is found for the newly introduced bottom object. Naturally, additional $s_a$ introduces additional $n_a$. Hence, the log of cardinality of the neighbour $N$ is found to be positive only where the log of cardinality of the success set $S$ is increasing. It is observed from FIG. 15 that the log cardinality of the success set $S$ is positive for the bottom object globe, whereas $s_a$ in FIG. 13 is zero, and the maximum reward for the globe in FIG. 14 is zero. This interesting finding is because the satisfaction of the new precondition corresponds to the fourth inference, which accelerates the identification of $s_a$ for any of the bottom object.

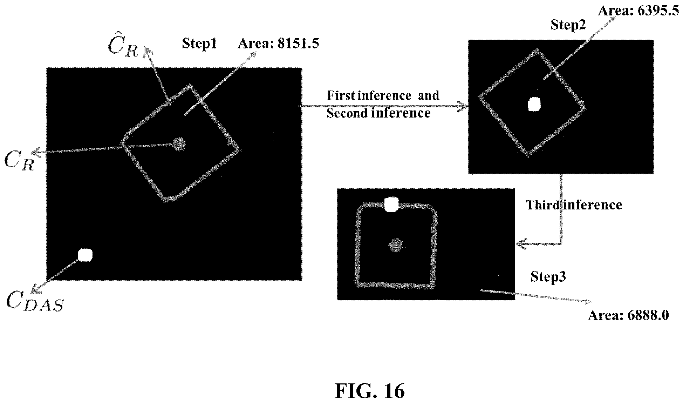

FIG. 16 depicts satisfying the plurality of new preconditions corresponding to a first inference, a second inference, and a third inference, for successfully performing the stacking operations, in accordance with some embodiments of the present disclosure.

At step1 of the FIG. 16, $C_{DAS}$ and $C_R$ are initially placed separately. At step2 of the FIG.16, $C_{DAS}$ and $C_R$ coincide after satisfying the precondition that corresponds to the first inference. The area covered by the contour $\hat{C}_R$ is less in the step2 the step3, which occurs after satisfying the precondition that corresponds to the second inference. Next, the $\hat{C}_R$ is matched with the $\hat{C}_d$ to satisfy the precondition that corresponds to the third inference. Further the precondition that corresponds to the fourth inference is satisfied, as mentioned at the beginning of this fold. $C_{DAS}$ and $C_R$ are separated slightly because of sensor noise, which introduces negligible error and does not affect system performance.

For the fourth fold, Table. I list the success rate during performing the object-invariant stacking operation by the traditional TAMP and the disclosed method, during the learning and prediction phases. Table. I show that the disclosed approach is outperforming the traditional TAMP in terms of success rate, both during the learning and during the prediction phases. An average success rate of 46.49% is attained for the bottom object globe by utilizing the learned rewards of other bottom objects during the prediction phase. The very cause of this success is that the learned reward is exploited by the disclosed stacking position selection strategy. This confirms that the disclosed ATAMP for the object-invariant stacking operations outperforms the traditional TAMP in terms of success rate by a significant margin.

**Table. I**

| Bottom object | Success rate in % by | | |
|---|---|---|---|
| | Traditional TAMP | ATAMP | |
| | | During learning | During Inference |
| Cube | 5.33 | 42 | 100 |
| Cylinder | 1.33 | 21.33 | 100 |
| Sledge | 3.33 | 42 | 100 |
| Sticks | 1.33 | 14 | 100 |
| Globe | 0 | 0 | 46.49# |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Embodiments herein provide a method and system for ATAMP for object-invariant stacking operations. The disclosed method results in generalization of the object-invariant stacking operations for multiple objects, in contrast to a handcrafted action model based TAMP. The disclosed method adopts an action model for a new object and stacking is performed by drawing inferences using intuitions and learning a reward using visual clues of a virtual Discrete Action Space (DAS) based on the heuristically defined reward function. With this reward function, the action model adaptation problem is formulated as an n-armed bandit problem. Additionally, an efficient stacking position selection strategy is used for the n-armed bandit problem, which leads to fast convergence. A robotic agent repetitively interacts with an environment in real-time to adapt the action model for the new object. After adaptation, the robotic agent can perform the object-invariant operations objects with varying poses. The disclosed method is tested in simulation using the UR5 manipulator with a two-finger gripper. The disclosed adaptive action model-based TAMP outperforms the traditional handcrafted action model-based TAMP by a significant margin in terms of success rate.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), the method comprising:

    receiving (302), via a one or more hardware processors of a robotic agent, an object-invariant stacking operation, an action model comprising a plurality of existing preconditions for performing the object-invariant stacking operation, an object, a plurality of bottom objects, an object release height, and a dimension of a virtual Discrete Action Space (DAS);
    initializing (304), via the one or more hardware processors, a reward function for a plurality of stacking positions corresponding to the virtual DAS, an object database, and a reward database; and
    training (306), by the one or more hardware processors, an Adaptive Task and Motion Planning (ATAMP) model with each of the plurality of bottom objects for performing the corresponding object-invariant stacking operation, by:

        picking (306a), by the robotic agent, the object, for stacking on the bottom object of the plurality of bottom objects;
        checking (306b) the plurality of existing preconditions in the action model, for performing the object-invariant stacking operation, wherein failure of at least one existing precondition of the plurality of existing preconditions results failure in performing the object-invariant stacking operation;
        generating (306c) a plurality of new preconditions upon successfully satisfying the plurality of existing preconditions;
        appending (306d) the plurality of new preconditions to the action model, to generate a new action model;

checking (306e) the plurality of new preconditions in the new action model, for performing the object-invariant stacking operation, wherein if the plurality of new preconditions are successfully satisfied, the object-invariant stacking operation is performed successfully by stacking the object on top of the bottom object at a success stacking position, and wherein failure of at least one new precondition of the plurality of new preconditions results in failure in performing the object-invariant stacking operation, and the bottom object is detected as a new bottom object;;

learning (306f) a plurality of stacking positions using a n-armed bandit problem upon detecting the new object via one of a second inference, a third inference, and a fourth inference; and

performing (306g) the object-invariant stacking operation on the bottom object, using the plurality of stacking positions from an updated virtual DAS.

2. The processor implemented method as claimed in claim 1, wherein the trained ATAMP model, during inferencing stage, upon satisfying the plurality of existing preconditions and the plurality of new preconditions, performs the object-invariant stacking operations.

3. The processor implemented method as claimed in claim 1, wherein the plurality of new preconditions are generated by:

(a) checking if the virtual DAS is on the top of the bottom object resulting in a first inference, wherein if the first inference returns false, results failure in performing the object-invariant stacking operation, and wherein if the first inference returns true, the second inference is checked;

(b) checking the object release height of the object resulting in the second inference, wherein the object release height is checked by matching perceived top surface area of the bottom object with the top surface area of the plurality of bottom objects in the object database, wherein the matching results in selection of a matching object from the object database, wherein if the second inference returns false, the bottom object is detected as the new object, and wherein if the second inference returns true, the third inference is checked;

(c) matching top surface contour of the bottom object with top surface contour of the matching object selected from the object database using the second inference resulting in the third inference, wherein if the third inference returns false, the bottom object is detected as the new object, and wherein if the third inference returns true, the fourth inference is checked;

(d) identifying the success stacking position by formulating the n-armed bandit problem using the reward database resulting in the fourth inference, wherein if the fourth inference returns false, results failure in finding the success stacking position, then the bottom object is detected as the new object, and wherein if the fourth inference returns true, results success in finding the success stacking position; and

(e) aggregating the first inference, the second inference, the third inference, and the fourth inference, to generate the plurality of new preconditions.

4. The processor implemented method as claimed in claim 3, wherein the object-invariant stacking operation is measured upon identifying the success stacking position, by formulating and computing the reward function as a function of (i) a height of the bottom object, (ii) a stacking height of the object, (iii) a rotation angle of the object around y-axis, and (iv) a rotation angle of the object around the x-axis, wherein the computed reward function is updated in the reward database.

5. The processor implemented method as claimed in claim 1, wherein the plurality of stacking positions for the detected new object is learnt by:

(a) identifying a plurality of characteristics of the new object;

(b) updating the object database with the identified plurality of characteristics of the new object;

(c) moving the object over the bottom object based on the virtual DAS, by an end-effector of the robotic agent, wherein the dimension of the virtual DAS for the n-armed bandit problem is discretized along length by l units and along width by b units, wherein the virtual DAS comprises lb number of grids, wherein the virtual DAS is an union of (i) a success set comprising a plurality of success stacking positions, (ii) a neighbour set comprising a plurality of neighbour stacking positions, and (iii) an explore set comprising a plurality of stacking positions, and wherein each grid of the virtual DAS represents one of the stacking position in (i) the success stacking position of the plurality of success stacking positions, (ii) the neighbour stacking position of the plurality of neighbour stacking positions, and (iii) the explore stacking position of the plurality of neighbour stacking positions;

(d) randomly generating an integer ($\varepsilon \in [1, \varepsilon_{max}]$), wherein $\varepsilon_l \in [1, \varepsilon_{max}]$ and $\varepsilon_h \in [1, \varepsilon_{max}]$ be two values of $\varepsilon$, and wherein $\varepsilon_h > \varepsilon_l$; and

(e) creating a stacking position selection strategy for the n-armed bandit problem comprising a first situation, a second situation and a third situation for learning the plurality of stacking positions, based on the values of the $\varepsilon$, the $\varepsilon_l$ and the $\varepsilon_h$, wherein the first situation is created by:

(i) checking prerequisites for the first situation comprising (i) $\varepsilon \geq \varepsilon_h$, or (ii) the success set $S = \emptyset$ and the neighbour set $N = \emptyset$;

(ii) choosing the explore stacking position from the explore set upon satisfying the prerequisites in the first situation, wherein the chosen explore stacking position is considered successful upon satisfaction of the reward function, and wherein if the chosen explore stacking position does not satisfy the reward function, then the random integer is regenerated;

(iii) performing a plurality of operations upon the explore stacking position successfully satisfying the reward function, the plurality of operation comprises:

removing the explore stacking position from the explore set;

converting the removed explore stacking position to the success stacking position;
appending the converted explore stacking position to the success set; and
adding the neighbour stacking positions that correspond to the neighbours of the appended converted explore stacking position to the neighbour set; and

(iv) updating the virtual DAS with the plurality of stacking positions in the explore set, the success set, and the neighbour set.

6. The processor implemented method as claimed in claim 5, wherein the second situation is created by:

(i) checking the prerequisites for the second situation comprising (i) $\varepsilon \geq \varepsilon_l$, and (ii) the neighbour set $N\,! = \emptyset$;

(ii) selecting the neighbour stacking position from the neighbour set, upon satisfying the prerequisites in the second situation, wherein the chosen neighbour stacking position is considered successful upon satisfaction of the reward function;

(iii) performing the plurality of operations upon the neighbour stacking position successfully satisfying the reward function, the plurality of operations comprises:

removing the neighbour stacking position form the neighbour set;
converting the removed neighbour stacking position to the success stacking position;
appending the converted neighbour stacking position to the success set; and
adding the neighbour stacking positions that correspond to neighbours of the appended converted neighbour stacking position to the neighbour set;

(iv) performing the plurality of operations upon the neighbour stacking position not satisfying the reward function, the plurality of operation comprises:

removing the neighbour stacking position from the neighbour set;
converting the neighbour stacking position to the explore stacking position; and
appending the converted neighbour stacking position to the explore set; and

(v) updating the virtual DAS with the plurality of stacking positions in the explore set, the success set, and the neighbour set.

7. The processor implemented method as claimed in claim 5, wherein creating the third situation upon not satisfying the first situation and the second situation by:

(i) selecting the success stacking position from the success set;
(ii) performing the plurality of operations upon the success stacking position not satisfying the reward function, the plurality of operation comprises:

removing the success stacking position from the success set;
converting the removed success stacking position to the explore stacking position; and
adding the converted success stacking position to the explore set; and

(iii) regenerating the random integer upon the selected success stacking position satisfying the reward function.

8. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive via a robotic agent, an object-invariant stacking operation, an action model comprising a plurality of existing preconditions for performing the object-invariant stacking operation, an object, a plurality of bottom objects, an object release height, and a dimension of a virtual Discrete Action Space (DAS);
initialize a reward function for a plurality of stacking positions corresponding to the virtual DAS, an object database, and a reward database; and
train an Adaptive Task and Motion Planning (ATAMP) model with each of the plurality of bottom objects for performing the corresponding object-invariant stacking operation, by:

picking, by the robotic agent, the object, for stacking on the bottom object of the plurality of bottom objects;
checking the plurality of existing preconditions in the action model, for performing the object-invariant stacking operation, wherein failure of at least one existing precondition of the plurality of existing preconditions results failure in performing the object-invariant stacking operation;
generating a plurality of new preconditions upon successfully satisfying the plurality of existing preconditions;
appending the plurality of new preconditions to the action model, to generate a new action model;
checking the plurality of new preconditions in the new action model, for performing the object-invariant stacking operation, wherein if the plurality of new preconditions are successfully satisfied, the object-invariant stacking operation is performed successfully by stacking the object on top of the bottom object at a success stacking position, and wherein failure of at least one new precondition of the plurality of new preconditions results in failure in performing the object-invariant stacking operation, and the bottom object is detected as a new bottom object;
learning a plurality of stacking positions using a n-armed bandit problem upon detecting the new object via one of a second inference, a third inference, and a fourth inference; and
performing the object-invariant stacking operation on the bottom object, using the plurality of stacking positions from an updated virtual DAS.

9. The system as claimed in claim 8, wherein the trained ATAMP model, during inferencing stage, upon satisfying the plurality of existing preconditions and the plurality of new preconditions, performs the object-invariant stacking operations.

10. The system as claimed in claim 8, wherein the plurality of new preconditions is generated by:

(a) checking if the virtual DAS is on the top of the bottom object resulting in a first inference, wherein if the first inference returns false, results failure in performing the object-invariant stacking operation, and wherein if the first inference returns true, the second inference is checked;
(b) checking the object release height of the object resulting in the second inference, wherein the object release height is checked by matching perceived top surface area of the bottom object with the top surface area of the plurality of bottom objects in the object database, wherein the matching results in selection of a matching object from the object database, wherein if the second inference returns false, the bottom object is detected as the new object, and wherein if the second inference returns true, the third inference is checked;
(c) matching top surface contour of the bottom object with top surface contour of the matching object selected from the object database using the second inference resulting in the third inference, wherein if the third inference returns false, the bottom object is detected as the new object, and wherein if the third inference returns true, the fourth inference is checked;
(d) identifying a success stacking position by formulating the n-armed bandit problem using the reward database resulting in the fourth inference, wherein if the fourth inference returns false, results failure in finding the success stacking position, then the bottom object is detected as the new object, and wherein if the fourth inference returns true, results success in finding the success stacking position; and

(e) aggregating the first inference, the second inference, the third inference, and the fourth inference, to generate the plurality of new preconditions.

11. The system as claimed in claim 10, wherein the object-invariant stacking operation is measured upon identifying the success stacking position, by formulating and computing the reward function as a function of (i) a height of the bottom object, (ii) a stacking height of the object, (iii) a rotation angle of the object around y-axis, and (iv) a rotation angle of the object around the x-axis, wherein the computed reward function is updated in the reward database.

12. The system as claimed in claim 8, wherein the plurality of stacking positions for the detected new object is learnt by:

(a) identifying a plurality of characteristics of the new object;
(b) updating the object database with the identified plurality of characteristics of the new object;
(c) moving the object over the bottom object based on the virtual DAS, by an end-effector of the robotic agent, wherein the dimension of the virtual DAS for the n-armed bandit problem is discretized along length by l units and along width by b units, wherein the virtual DAS comprises lb number of grids, wherein the virtual DAS is an union of (i) a success set comprising a plurality of success stacking positions, (ii) a neighbour set comprising a plurality of neighbour stacking positions, and (iii) an explore set comprising a plurality of stacking positions, and wherein each grid of the virtual DAS represents one of the stacking position in (i) the success stacking position of the plurality of success stacking positions, (ii) the neighbour stacking position of the plurality of neighbour stacking positions, and (iii) the explore stacking position of the plurality of neighbour stacking positions;
(d) randomly generating an integer ($\varepsilon \in [1, \varepsilon_{max}]$), wherein $\varepsilon_l \in [1, \varepsilon_{max}]$ and $\varepsilon_h \in [1, \varepsilon_{max}]$ be two values of $\varepsilon$, and wherein $\varepsilon_h > \varepsilon_l$; and
(e) creating a stacking position selection strategy comprising a first situation, a second situation and a third situation for learning the plurality of stacking positions, based on the values of the $\varepsilon$, the $\varepsilon_l$ and the $\varepsilon_h$, wherein the first situation is created by:

(i) checking prerequisites for the first situation comprising (i) $\varepsilon \geq \varepsilon_h$, or (ii) the success set $S = \emptyset$ and the neighbour set $N = \emptyset$;
(ii) choosing the explore stacking position from the explore set upon satisfying the prerequisites in the first situation, wherein the chosen explore stacking position is considered successful upon satisfaction of the reward function, and wherein if the chosen explore stacking position does not satisfy the reward function then the random integer is regenerated;
(iii) performing a plurality of operations upon the explore stacking position successfully satisfying the reward function, the plurality of operation comprises:

removing the explore stacking position from the explore set;
converting the removed explore stacking position to the success stacking position;
appending the converted explore stacking position to the success set; and
adding the neighbour stacking positions that correspond to the neighbour of the appended converted explore stacking position to the neighbour set; and

(iv) updating the virtual DAS with the plurality of stacking positions in the explore set, the success set, and the neighbour set.

13. The system as claimed in claim 12, wherein the second situation is created by:

(i) checking the prerequisites for the second situation comprising (i) $\varepsilon \geq \varepsilon_l$, and (ii) the neighbour set $N != \emptyset$;
(ii) selecting the neighbour stacking position from the neighbour set, upon satisfying the prerequisites in the second situation, wherein the chosen neighbour stacking position is considered successful upon satisfaction of the reward function;
(iii) performing the plurality of operations upon the nieghbor stacking position successfully satisfying the reward function, the plurality of operations comprises:

removing the neighbour stacking position form the neighbour set;
converting the removed neighbour stacking position to the success stacking position;
appending the converted neighbour stacking position to the success set; and
adding the neighbour stacking positions that correspond to the neighbours of the appended neighbour stacking position to the neighbour set;

(iv) performing the plurality of operations upon the neighbour stacking position not satisfying the reward function, the plurality of operation comprises:

removing the neighbour stacking position from the neighbour set;
converting the neighbour stacking position to the explore stacking position; and
appending the converted neighbour stacking position to the explore set; and

(v) updating the virtual DAS with the plurality of stacking positions in the explore set, the success set, and the neighbour set.

14. The system as claimed in claim 12, wherein creating the third situation upon not satisfying the first situation and the second situation by:

(i) selecting the success stacking position from the success set;
(ii) performing the plurality of operations upon the success stacking position not satisfying the reward function, the plurality of operation comprises:

removing the success stacking position from the success set;
converting the removed success stacking position to the explore stacking position; and
adding the converted success stacking position to the explore set; and

(iii) regenerating the random integer upon the selected success stacking position satisfying the reward function.

15. One or more non-transitory machine-readable information storage mediums comprising one or more instructions which when executed by one or more hardware processors cause:

receiving, via a robotic agent, an object-invariant stacking operation, an action model comprising a plurality of existing preconditions for performing the object-invariant stacking operation, an object, a plurality of bottom objects, an object release height, and a dimension of a virtual Discrete Action Space (DAS);
initializing a reward function for a plurality of stacking positions corresponding to the virtual DAS, an object database, and a reward database; and
training an Adaptive Task and Motion Planning (ATAMP) model with each of the plurality of bottom objects for performing the corresponding object-invariant stacking operation, by:

picking, by the robotic agent, the object, for stacking on the bottom object of the plurality of bottom objects;
checking the plurality of existing preconditions in the action model, for performing the object-invariant stacking operation, wherein failure of at least one existing precondition of the plurality of existing preconditions results failure in performing the object-invariant stacking operation;
generating a plurality of new preconditions upon successfully satisfying the plurality of existing preconditions;
appending the plurality of new preconditions to the action model, to generate a new action model;
checking the plurality of new preconditions in the new action model, for performing the object-invariant stacking operation, wherein if the plurality of new preconditions are successfully satisfied, the object-invariant stacking operation is performed successfully by stacking the object on top of the bottom object at a success stacking position, and wherein failure of at least one new precondition of the plurality of new preconditions results in failure in performing the object-invariant stacking operation, and the bottom object is detected as a new bottom object;;
learning a plurality of stacking positions using a n-armed bandit problem upon detecting the new object via one of a second inference, a third inference, and a fourth inference; and
performing the object-invariant stacking operation on the bottom object, using the plurality of stacking positions from an updated virtual DAS.

SYSTEM

100

MEMORY

102

DATABASE

108

HARDWARE

PROCESSOR(S)

104

I/O INTERFACE(S)

106

**FIG. 1**

**FIG. 2**

300 ⟍

receiving, via a robotic agent, an object invariant stacking operation, an action model comprising a plurality of existing preconditions for performing the object invariant stacking operation, a stacking object, a plurality of bottom objects, an object release height, and a dimension of a virtual Discrete Action Space (DAS) **302**

initializing, a reward function for a plurality of stacking positions corresponding to the virtual DAS, and an object database, and a reward database **304**

training an Adaptive Task and Motion Planning (ATAMP) model with each of the plurality of bottom objects for performing the corresponding object invariant stacking operation, by: **306**

picking by the robotic agent, the stacking object, for stacking on the bottom object of the plurality of bottom objects **306a**

A

**FIG. 3A**

$$\text{A}$$

checking the plurality of existing preconditions in the action model, for performing the object invariant stacking operation **306b**

generating a plurality of new preconditions upon successfully satisfying the plurality of existing preconditions **306c**

appending the plurality of new preconditions to the action model, to generate a new action model **306d**

checking the plurality of new preconditions in the new action model, for performing the object invariant stacking operation, **306e**

learning a plurality of stacking positions using a n-armed bandit upon detecting the new object via one of a second inference, a third inference, and a fourth inference **306f**

performing the object invariant stacking operation on the bottom object, using the plurality of stacking positions from the virtual DAS **306g**

**FIG. 3B**

FIG. 4A

FIG. 4B

**FIG. 4C**

**FIG. 5**

**FIG. 6**

**FIG. 7**

**FIG. 8**

**FIG. 9**

**FIG. 10A**

**FIG. 10B**

**FIG. 11**

**FIG. 12**

**FIG. 13**

**FIG. 14**

**FIG. 15**

**FIG. 16**

# EUROPEAN SEARCH REPORT

**Application Number**

EP 25 16 3728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AIDAN CURTIS ET AL: "Partially Observable Task and Motion Planning with Uncertainty and Risk Awareness", ARXIV.ORG, CORNELL UNIVERSITY LIBRARY, 201 OLIN LIBRARY CORNELL UNIVERSITY ITHACA, NY 14853, 15 March 2024 (2024-03-15), XP091701421, * III- IV.B; figure 2 * * V.A- V.B * * Appendix D.2; example Algorithm 1 * | 1-15 | INV. B25J9/16 G06N3/08 |
| A | SHUO CHENG ET AL: "LEAGUE: Guided Skill Learning and Abstraction for Long-Horizon Manipulation", ARXIV.ORG, CORNELL UNIVERSITY LIBRARY, 201 OLIN LIBRARY CORNELL UNIVERSITY ITHACA, NY 14853, 22 August 2023 (2023-08-22), XP091584936, * IIIB- III.C; figure 2 * | 1-15 | |
| A | TIANYU REN ET AL: "Extended Tree Search for Robot Task and Motion Planning", ARXIV.ORG, CORNELL UNIVERSITY LIBRARY, 201 OLIN LIBRARY CORNELL UNIVERSITY ITHACA, NY 14853, 11 October 2021 (2021-10-11), XP091066862, * V.B * | 1-15 | TECHNICAL FIELDS SEARCHED (IPC) B25J G06N G05B |

The present search report has been drawn up for all claims

| Place of search | Date of completion of the search | Examiner |
|---|---|---|
| The Hague | 21 July 2025 | De Porcellinis, S |

EPO FORM 1503 03.82 (P04C01)

**EP 4 617 009 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421019502